(19) Europäisches Patentamt
European Patent Office
Office européen des brevets

(11) **EP 3 904 474 A1**

(12) **EUROPEAN PATENT APPLICATION**
published in accordance with Art. 153(4) EPC

(43) Date of publication:
**03.11.2021 Bulletin 2021/44**

(21) Application number: **19904511.3**

(22) Date of filing: **06.12.2019**

(51) Int Cl.:
**C09D 11/322** (2014.01)   **B41M 5/00** (2006.01)

(86) International application number:
**PCT/JP2019/047921**

(87) International publication number:
**WO 2020/137457 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2018 JP 2018243719**

(71) Applicant: **Kao Corporation**
**Chuo-ku,**
**Tokyo 103-8210 (JP)**

(72) Inventors:
• **EGAWA, Tsuyoshi**
 **Wakayama-shi, Wakayama 640-8580 (JP)**
• **AKAGI, Ryuichi**
 **Wakayama-shi, Wakayama 640-8580 (JP)**
• **KOZAKE, Katsuyuki**
 **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **WATER-BASED INKJET PRINTING INK**

(57)   The present invention relates to [1] a water-based ink for ink-jet printing on a low-liquid absorbing printing medium, containing pigment-containing water-insoluble polymer particles A, pigment-free water-insoluble polymer particles B, a water-soluble organic solvent and water, in which the water-soluble organic solvent contains an alkanediol having from 3 to 4 carbon atoms and a glycol ether having a boiling point equal to or lower than a boiling point of the alkanediol; and Tg of a water-insoluble polymer constituting the polymer particles B is from 0 to 75°C, and [2] an ink-jet printing method including the step of printing characters or images on a low-liquid absorbing printing medium using the aforementioned ink. The water-based ink for ink-jet printing according to the present invention is excellent in fixing properties and anti-color bleeding properties.

EP 3 904 474 A1

**Description**

FIELD OF THE INVENTION

The present invention relates to a water-based ink for ink-jet printing, and an ink-jet printing method using the water-based ink.

BACKGROUND OF THE INVENTION

In ink-jet printing methods, droplets of ink are directly ejected from very fine nozzles and allowed to adhere to a printing medium to obtain a printed material, etc., on which characters or images are printed. The ink-jet printing methods have become rapidly spread because of various advantages such as easiness of full coloration, low cost and non-contact with the printing medium. In recent years, in particular, from the viewpoint of improving weathering resistance and water resistance of the resulting printed material, the ink-jet printing methods using an ink containing a pigment as a colorant have become predominant.

Meanwhile, soft packaging has been extensively used for packaging foods, etc. In the soft packaging, names of goods to be packaged, etc., are indicated by printing on a thin flexible low-liquid absorbing printing medium formed of a synthetic resin, etc. Printing for the soft packaging has been conducted mainly by gravure printing. However, an oil-based gravure ink used in the gravure printing usually contains an organic solvent to disperse or dissolve a pigment or a resin therein, and therefore tends to pose problems concerning burden on working environments, etc.

In consequence, studies have been made on an ink-jet printing method using an active energy ray-curable ink in place of the oil-based gravure ink. However, the active energy ray-curable ink has a fear concerning generation of a malodor therefrom. In particular, when using the active energy ray-curable ink in the soft packaging that has been often used for food packaging, the malodor problem tends to exert a large adverse influence thereon.

For this reason, development of a water-based ink for ink-jet printing which has a less burden on working environments has now proceeded.

For example, JP 2013-216864A (Patent Literature 1) discloses an aqueous ink-jet ink that contains at least water, a pigment and water-dispersible resin fine particles and further contains two or more kinds of water-soluble organic solvents, as an aqueous ink that is excellent in printability to a hardly absorptive substrate, ejection stability, storage stability and coating film durability, in which at least one of the water-soluble organic solvents is a (poly)propylene glycol alkyl ether having a boiling point of 100 to 180°C and at least another one of the water-soluble organic solvents is a $C_4$ or higher alkanediol having a boiling point of 180 to 230°C, and a content of the (poly)propylene glycol alkyl ether in the aqueous ink composition is from 5 to 20% by weight, and a content of the alkanediol in the aqueous ink composition is from 10 to 25% by weight.

However, the conventional aqueous inks as described in the Patent Literature 1 have posed such a problem that they still fail to form good printed characters or images on a low-liquid absorbing printing medium used for soft packaging, etc.

SUMMARY OF THE INVENTION

The present invention relates to a water-based ink for ink-jet printing on a low-liquid absorbing printing medium, containing pigment-containing water-insoluble polymer particles A, pigment-free water-insoluble polymer particles B, a water-soluble organic solvent and water, in which:

the water-soluble organic solvent contains an alkanediol having not less than 3 and not more than 4 carbon atoms and a glycol ether having a boiling point equal to or lower than a boiling point of the alkanediol; and
a glass transition temperature (Tg) of a water-insoluble polymer constituting the polymer particles B is not lower than 0°C and not higher than 75°C.

BRIEF DESCRIPTION OF THE DRAWING

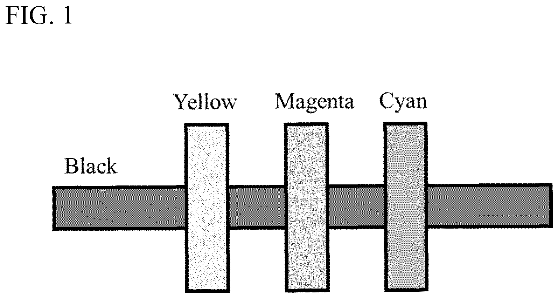

FIG. 1 is a view showing a print pattern used for evaluation of printability in Examples.

DETAILED DESCRIPTION OF THE INVENTION

Upon conducting ink-jet printing on a low-liquid absorbing printing medium, a water-based ink tends to be hardly penetrated into the printing medium. Therefore, when allowing droplets of the water-based ink to successively impact on the printing medium in an overstriking manner, the droplets of the ink tend to remain in a non-dried state on the printing medium, so that there tends to occur such a phenomenon that the droplets of the ink are mixed with each other thereon, which results in associated problem of occurrence of color bleeding. The problem of occurrence of color bleeding tends to become more remarkable, in particular, in the case where the printing is conducted on a synthetic resin printing medium.

In addition, in the ink-jet printing on the low-liquid absorbing printing medium, since the water-based ink tends to be hardly penetrated into the printing medium, there tends to occur such a problem that the ink is deteriorated in fixing properties. Moreover, when using the synthetic resin printing medium that tends to undergo adverse influence by heating, it tends to be difficult to improve fixing properties of the ink thereonto by increasing the heating temperature.

The present invention relates to a water-based ink for ink-jet printing which is excellent in fixing properties and anti-color bleeding properties, and an ink-jet printing method using the water-based ink.

The present inventors have found that the aforementioned conventional problems can be solved by a water-based ink that contains pigment-containing water-insoluble polymer particles A and pigment-free water-insoluble polymer particles B, in which a polymer having a specific glass transition temperature (Tg) is used as a water-insoluble polymer constituting the polymer particles B, and a specific alkanediol and a specific glycol ether are compounded as the water-soluble organic solvent in the ink.

That is, the present invention relates to the following aspects [1] and [2].

[1] A water-based ink for ink-jet printing on a low-liquid absorbing printing medium, containing pigment-containing water-insoluble polymer particles A, pigment-free water-insoluble polymer particles B, a water-soluble organic solvent and water, in which:

the water-soluble organic solvent contains an alkanediol having not less than 3 and not more than 4 carbon atoms and a glycol ether having a boiling point equal to or lower than a boiling point of the alkanediol; and
a glass transition temperature (Tg) of a water-insoluble polymer constituting the polymer particles B is not lower than 0°C and not higher than 75°C.

[2] An ink-jet printing method including the step of printing characters or images on a low-liquid absorbing printing medium using the water-based ink according to the above aspect [1].

In accordance with the present invention, it is possible to provide a water-based ink for ink-jet printing which is excellent in fixing properties and anti-color bleeding properties, and an ink-jet printing method using the water-based ink.

[Water-Based Ink]

The water-based ink for ink-jet printing according to the present invention is a water-based ink for ink-jet printing on a low-liquid absorbing printing medium (hereinafter also referred to merely as an "ink of the present invention"), the water-based ink containing pigment-containing water-insoluble polymer particles A, pigment-free water-insoluble polymer particles B, a water-soluble organic solvent and water, in which:

the water-soluble organic solvent contains an alkanediol having not less than 3 and not more than 4 carbon atoms and a glycol ether having a boiling point equal to or lower than a boiling point of the alkanediol; and
a glass transition temperature (Tg) of a water-insoluble polymer constituting the polymer particles B is not lower than 0°C and not higher than 75°C.

Meanwhile, the term "water-based" as used herein means that water has a largest content among components of a medium contained in the water-based ink.

The term "low-liquid absorbing" as used herein means a concept including both of low-liquid absorbing properties and non-liquid absorbing properties of a printing medium against an ink. The "low-liquid absorbing" properties may be evaluated by absorption of pure water to the printing medium. More specifically, the "low-liquid absorbing" means that the water absorption per a unit surface area of the printing medium as measured by contacting the printing medium with pure water for 100 milliseconds is not less than 0 $g/m^2$ and not more than 10 $g/m^2$.

The term "printing" as used herein means a concept that includes printing or typing operation for printing characters or images.

The meaning of the term "waster-insoluble" will be described in more details hereinlater in the explanation of the respective polymers.

The ink of the present invention is capable of providing a high-quality printed material that is excellent in fixing properties and anti-color bleeding properties. The reason why the aforementioned advantageous effects can be attained by the present invention is considered as follows, though it is not clearly determined yet.

That is, in the case where the printing is conducted on a low-liquid absorbing printing medium such as a synthetic resin printing medium, etc., using the water-based ink, it is usually required to subject the resulting printed material to a drying step. However, since the synthetic resin printing medium, etc., generally undergo adverse influence by heating, when subjecting the printing medium to the drying step, there tend to occur problems such as deviation in direction of transportation of the printing medium in association with deformation thereof, etc. For this reason, the drying temperature of the low-liquid absorbing printing medium should be limited to about 50°C. In addition, if the printing speed is increased, the time of the drying step is reduced to a short period of time such as about several seconds. Under these environmental conditions, it has been required to prevent occurrence of color bleeding between droplets of the ink on the low-liquid absorbing printing medium.

In the present invention, by using an alkanediol having not less than 3 and not more than 4 carbon atoms and a glycol ether having a boiling point equal to or lower than a boiling point of the alkanediol as the water-soluble organic solvent, the resulting ink can be improved in fixing properties. The reason therefor is considered to be that the glycol ether acts for plasticizing the water-insoluble polymer constituting the pigment-free water-insoluble polymer particles B. In addition, in the present invention, the glass transition temperature (Tg) of the pigment-free water-insoluble polymer B as a fixing resin is controlled to a temperature of not lower than 0°C and not higher than 75°C. By this, it is possible to surely fix the pigment particles on the synthetic resin printing medium in the drying step.

In addition, the alkanediol is hydrophilic, whereas the glycol ether is hydrophobic. In the drying step, since the hydrophobic glycol ether is evaporated earlier than the alkanediol, the environment of a late stage of the drying step is maintained in such a condition in which a content of the alkanediol in the ink is large. For this reason, the change in surface tension of the ink present in the late stage of the drying step becomes small, and it is therefore possible to reduce the difference in surface tension between droplets of the ink during the heating step and thereby suppress occurrence of the phenomenon of mixing of the droplets of the ink. As a result, it is considered that the resulting ink can be prevented from suffering from color bleeding.

<Pigment-Containing Water-Insoluble Polymer Particles A>

(Pigment)

The pigment used in the present invention is contained in the from of pigment-containing water-insoluble polymer particles A in the ink from the viewpoint of improving fixing properties and anti-color bleeding properties of the resulting ink. The "pigment-containing polymer particles A" as used in the present specification are intended to include a configuration in which the pigment is incorporated in the polymer dispersant, a configuration in which the pigment is partially exposed on a surface of respective particles formed of the polymer dispersant and the pigment, a configuration in which the polymer dispersant is adsorbed onto a part of the pigment, and the like.

In the present invention, the pigment-containing water-insoluble polymer particles are maintained in the ink of the present invention in such a condition that the particles having a particle size of not more than 200 nm are dispersed therein.

The pigment may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides such as titanium oxide, iron oxide, red iron oxide, chromium oxide, etc., iridescent nacreous pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments having a white color, a black color, a gray color, etc., and chromatic color pigments having a yellow color, a red color, a cyan color, a blue color, a red color, an orange color, a green color, etc.

Examples of the extender pigment include silica, calcium carbonate, talc and the like.

The aforementioned pigments may be used alone or in the form of a mixture of any two or more thereof.

<Water-Insoluble Polymer a Constituting Pigment-Containing Water-Insoluble Polymer Particles A>

The water-insoluble polymer a constituting the pigment-containing water-insoluble polymer particles A (hereinafter also referred to merely as a "polymer a") is not particularly limited as long as the polymer is capable of exhibiting at least an ability of dispersing the pigment.

The term "water-insoluble" of the polymer a as used in the present invention means that when the polymer is dried to a constant weight at 105°C for 2 hours and then dissolved in 100 g of water at 25°C, the solubility in water of the polymer is not more than 10 g. The solubility in water of the polymer a is preferably not more than 5 g and more preferably not more than 1 g. In the case where the polymer a is in the form of an anionic polymer, the aforementioned solubility means a solubility in water of the polymer whose anionic groups are neutralized completely (i.e., 100%) with sodium hydroxide. In the case where the polymer a is in the form of a cationic polymer, the aforementioned solubility means a solubility in water of the polymer whose cationic groups are neutralized completely (i.e., 100%) with hydrochloric acid.

The configuration of the polymer a present in the resulting ink is preferably a pigment-enclosing configuration in which the pigment is incorporated in the polymer a from the viewpoint of improving dispersion stability of the pigment.

The pigment-containing water-insoluble polymer particles are preferably in the form of polymer particles crosslinked with a crosslinking agent as described hereinlater. In this case, even though the polymer used for dispersing the pigment is a water-soluble polymer, the polymer is transformed into a water-insoluble polymer by crosslinking the polymer with the crosslinking agent.

The ionic group contained in a molecule of the polymer a is preferably introduced into a polymer skeleton thereof by an ionic monomer (a-1) from the viewpoint of improving dispersion stability and storage stability of the pigment-containing polymer particles A. More specifically, it is preferred that the polymer a contains a constitutional unit derived from the ionic monomer (a-1). Examples of the polymer a include a vinyl-based resin, a polyester-based resin, a polyurethane-based resin and the like.

Among these resins, preferred is the vinyl-based resin, and more preferred is the vinyl-based resin that is produced by copolymerizing a raw material monomer (a) containing the ionic monomer (a-1) and a hydrophobic monomer (a-2).

The vinyl-based resin preferably contains a constitutional unit derived from the component (a-1) and a constitutional unit derived from the component (a-2). The vinyl-based resin may further contain a constitutional unit derived from a nonionic monomer (a-3) from the viewpoint of improving dispersion stability, fixing properties, etc., of the pigment.

[Ionic Monomer (a-1)]

As the ionic monomer (a-1), there may be mentioned an anionic monomer and a cationic monomer. Among these monomers, preferred is an anionic monomer, more preferred is a monomer containing an acid group, and even more preferred is a monomer containing a carboxy group.

Specific examples of the ionic monomer (a-1) include those monomers described in the paragraph [0017] of JP 2018-80255A. Among these monomers, preferred is at least one monomer selected from the group consisting of acrylic acid and methacrylic acid.

[Hydrophobic Monomer (a-2)]

The term "hydrophobic" of the hydrophobic monomer (a-2) as used in the present invention means that a solubility in water of the monomer as measured by dissolving the monomer in 100 g of ion-exchanged water at 25°C until reaching a saturation concentration thereof is less than 10 g. The solubility in water of the hydrophobic monomer (a-2) is preferably not more than 5 g and more preferably not more than 1 g from the viewpoint of improving fixing properties to the pigment.

As the hydrophobic monomer (a-2), there may be mentioned an alkyl (meth)acrylate, an aromatic ring-containing monomer and a macromonomer. Among these monomers, preferred is at least one monomer selected from the group consisting of an alkyl (meth)acrylate and an aromatic ring-containing monomer, and more preferred is an aromatic ring-containing monomer.

Specific examples of the hydrophobic monomer (a-2) include those monomers described in the paragraphs [0018] to [0021] of JP 2018-80255A. Among these monomers, preferred is at least one monomer selected from the group consisting of styrene, $\alpha$-methyl styrene and benzyl (meth)acrylate.

[Nonionic Monomer (a-3)]

As the nonionic monomer (a-3), there may be mentioned a polyalkylene glycol (meth)acrylate and the like.

Specific examples the nonionic monomer (a-3) include those monomers described in the paragraphs [0022] and [0023] of JP 2018-80255A.

(Contents of Respective Components in Raw Material Monomer (a) or Contents of Respective Constitutional Units in Vinyl-Based Resin)

The contents of the components (a-1), (a-2) and (a-3) in the raw matrial monomer (a) containing these components (contents of non-neutralized components; hereinafter defined in the same way) upon production of the vinyl-based resin, or the contents of the constitutional unit derived from the component (a-1), the constitutional unit derived from the component (a-2) and the constitutional unit derived from the component (a-3) in the vinyl-based resin are as follows, from the viewpoint of improving dispersion stability of the pigment-containing polymer particles A.

The content of the component (a-1) is preferably not less than 10% by mass, more preferably not less than 20% by mass and even more preferably not less than 30% by mass, and is also preferably not more than 60% by mass, more preferably not more than 50% by mass and even more preferably not more than 40% by mass.

The content of the component (a-2) is preferably not less than 30% by mass, more preferably not less than 40% by mass and even more preferably not less than 50% by mass, and is also preferably not more than 90% by mass, more preferably not more than 80% by mass and even more preferably not more than 75% by mass.

In the case where the component (a-3) is included, the content of the component (a-3) is preferably not less than 5% by mass and more preferably not less than 10% by mass, and is also preferably not more than 30% by mass and more preferably not more than 20% by mass.

The mass ratio of the component (a-1) to the component (a-2) [(a-1)/(a-2)] is preferably not less than 0.2, more preferably not less than 0.25 and even more preferably not less than 0.30, and is also preferably not more than 1.2, more preferably not more than 1.0 and even more preferably not more than 0.8.

Incidentally, the contents of the constitutional units derivaed from the components (a-1), (a-2) and (a-3) in the vinyl-based resin used in the present inventin not only may be determined by actual measurements thereof, but also may be indicated by substitution of respective ratios of the components (a-1), (a-2) and (a-3) charged in the raw material monomer (a) containing these components upon production of the vinyl-based resin therefor. Among these components, the content of the component (a-1) may be suitably determined by potentiometric titration, whereas the contents of the components (a-2) and (a-3) may be suitably indicated by substitution of the respective ratios of the components (a-2) and (a-3) charged in the raw material monomer (a) therefor.

(Production of Vinyl-Based Resin)

The vinyl-based resin may be produced by copolymerizing the raw material monomer (a) by conventionally known polymerization methods such as a bulk polymerization method, a solution polymerization method, a suspension polymerization method, an emulsion polymerization method, etc. Among these polymerization methods, preferred is the solution polymerization method.

The solvent used in the solution polymerization method is not particularly limited, and is preferably an organic polar solvent. Examples of the organic polar solvent include aliphatic alcohols having not less than 1 and not more than 3 carbon atoms; ketones having not less than 3 and not more than 5 carbon atoms; ethers; esters such as ethyl acetate, etc.; and the like. Among these organic polar solvents, preferred is ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a polymerization chain transfer agent.

Examples of the polymerization initiator include conventionally known polymerization initiators, e.g., azo compounds such as 2,2'-azobisisobutyronitrile, 2,2'-azobis(2,4-dimethylvaleronitrile), etc., organic peroxides such as *tert*-butyl peroxyoctoate, benzoyl peroxide, etc.; and the like. The amount of the radical polymerization initiator used in the polymerization is preferably not less than 0.001 mol and not more than 5 mol, and more preferably not less than 0.01 mol and not more than 2 mol, per 1 mol of the raw material monomer (a).

Examples of the polymerization chain transfer agent include conventionally known polymerization chain transfer agents, e.g., carboxy group-containing mercaptans such as 2-mercaptopropionic acid, etc.; alkyl mercaptans such as octanethiol, etc.; hydroxy group-containing mercaptans such as 2-mercaptoethanol, 3-mercapto-1,2-propanediol, etc.; and the like.

In addition, the type of a polymerization chain of the monomer polymerized is not particularly limited, and may be of any of a random type, a block type, a grafted type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Furthermore, the polymerization is preferably conducted in a nitrogen gas atmosphere or an atmosphere of an inert gas such as argon, etc.

After completion of the polymerization reaction, the polymer produced may be isolated from the obtained reaction solution by known methods such as reprecipitation, removal of the solvent by distillation, etc. In addition, the resulting polymer may be purified by removing the unreacted monomers, etc., from the polymer by reprecipitation, membrane separation, chromatography, extraction, etc.

The number-average molecular weight of the vinyl-based resin is preferably not less than 2,000 and more preferably not less than 5,000, and is also preferably not more than 20,000 and more preferably not more than 18,000, from the viewpoint of improving adsorptivity of the resin to the pigment and dispersion stability of the pigment.

The number-average molecular weight may be measured by the method described in Examples below.

[Production of Pigment-Containing Water-Insoluble Polymer Particles A]

The pigment-containing water-insoluble polymer particles A may be efficiently produced in the form of a pigment water dispersion thereof by a process including the following steps 1 and 2.

In addition, from the viewpoint of improving fixing properties and anti-color bleeding properties of the resulting ink, it is preferred that the aforementioned process further includes the step 3 (crosslinking step).

Step 1: subjecting a pigment mixture containing the pigment, the polymer a constituting the pigment-containing water-insoluble polymer particles, an organic solvent and water to dispersion treatment to obtain a dispersion treatment product;

Step 2: removing the organic solvent from the dispersion treatment product obtained in the step 1 to obtain a water dispersion of pigment-containing water-insoluble polymer particles a1 (hereinafter also referred to merely as a "pigment water dispersion (i)"); and

Step 3: adding a crosslinking agent to the pigment water dispersion (i) obtained in the step 2 to subject a part or whole of the pigment-containing water-insoluble polymer particles a1 to crosslinking reaction, thereby obtaining a water dispersion (I) of pigment-containing water-insoluble polymer particles a2 (hereinafter also referred to merely as a "pigment water dispersion (I)").

The pigment-containing water-insoluble polymer particles A used in the present invention include the pigment-containing water-insoluble polymer particles a1 and the pigment-containing water-insoluble polymer particles a2.

(Step 1)

The pigment mixture used in the step 1 is preferably obtained by the method in which the polymer a is first dissolved in an organic solvent, and then the pigment and water are added and mixed, if required together with a neutralizing agent, a surfactant, etc., into the resulting organic solvent solution to prepare a dispersion liquid of an oil-in-water type. The order of addition of the respective components to the organic solvent solution of the polymer a is not particularly limited, and it is preferred that water, the neutralizing agent and the pigment are successively added thereto in this order.

The organic solvent used in the step 1 is not particularly limited. Examples of the preferred organic solvent include ketones, ethers, esters, aliphatic alcohols having not less than 1 and not more than 3 carbon atoms and the like. Among these organic solvents, from the viewpoint of improving wettability to the pigment, solubility of the polymer a therein and adsorptivity to the pigment, more preferred are ketones having not less than 4 and not more than 8 carbon atoms, even more preferred are methyl ethyl ketone and methyl isobutyl ketone, and further even more preferred is methyl ethyl ketone. In the case where the vinyl-based resin as the polymer a is synthesized by a solution polymerization method, the solvent used in the solution polymerization method may be directly used as such in the step 1.

The mass ratio of the organic solvent to the polymer a [organic solvent/polymer a] in the pigment mixture is preferably not less than 0.5, more preferably not less than 0.8 and even more preferably not less than 1, and is also preferably not more than 2.5, more preferably not more than 2 and even more preferably not more than 1.5, from the viewpoint of improving wettability and adsorptivity to the pigment and solubility of the polymer a in the organic solvent.

In the case where the polymer a contains acid groups, it is preferred that the acid groups are at least partially neutralized using a neutralizing agent. It is considered that by neutralizing the acid groups of the polymer a, electric repulsion force between the pigment particles which is exhibited after the neutralization tends to become large, so that it is possible to suppress flocculation of the pigment particles in the ink of the present invention, prevent increase in viscosity of the ink, and improve dispersion stability of the pigment and storage stability of the resulting ink.

When neutralizing the acid groups of the polymer a, the neutralization is preferably conducted such that the pH value of the resulting dispersion falls within the range of not less than 7 and not more than 11.

Examples of the neutralizing agent include bases such as lithium hydroxide, sodium hydroxide, potassium hydroxide, ammonia, various amines and the like. Among these neutralizing agents, preferred are sodium hydroxide and ammonia.

The aforementioned neutralizing agents may be used alone or in the form of a mixture of any two or more thereof. In addition, the polymer a may be previously neutralized.

The equivalent of the neutralizing agent used is preferably not less than 10 mol%, more preferably not less than 20 mol% and even more preferably not less than 30 mol%, and is also preferably not more than 150 mol%, more preferably not more than 120 mol% and even more preferably not more than 100 mol%, from the viewpoint of improving storage stability of the resulting ink.

The equivalent of the neutralizing agent used as defined herein may be calculated according to the following formula wherein the polymer a before being neutralized is expressed by a polymer a'.

Equivalent (mol%) of neutralizing agent used = [{mass (g) of neutralizing agent added/equivalent of neutralizing agent}/[{acid value (mgKOH/g) of polymer a' x mass (g) of polymer a'}/(56 x 1,000)]] x 100.

In the dispersion treatment of the step 1, the pigment particles may be atomized into fine particles having a desired particle size only by substantial dispersion treatment in which a shear stress is applied to the pigment particles. However, it is preferred that the pigment mixture is first subjected to preliminary dispersion treatment, and then further to the substantial dispersion treatment, from the viewpoint of obtaining a uniform pigment water dispersion.

Examples of a disperser used in the preliminary dispersion treatment include ordinaroly used mixing and stirring devices such as an anchor blade, a disper blade, etc.

Examples of the means for applying a shear stress to the particles which is used in the substantial dispersion treatment include kneading machines such as roll mills, kneaders, etc.; high-pressure homogenizers such as "Microfluidizer", etc.; and media-type dispersers such as paint shakers, beads mills, etc. Among these devices, the high-pressure homogenizers are preferably used from the viewpoint of reducing the particle size of the pigment.

(Step 2)

The step 2 is the step of removing the organic solvent from the dispersion treatment product obtained in the step 1 to obtain a pigment water dispersion (i). The removal of the organic solvent from the dispersion treatment product may be conducted by conventionally known methods. The organic solvent is preferably substantially completely removed from the thus obtained pigment water dispersion (i). However, the residual organic solvent may be present in the pigment water dispersion (i) unless the objects and advantageous effects of the present invention are adversely affected by the residual organic solvent. The content of the residual organic solvent in the pigment water dispersion (i) is preferably not more than 0.1% by mass and more preferably not more than 0.01% by mass.

(Step 3)

The step 3 is the step of adding a crosslinking agent to the pigment water dispersion (i) obtained in the step 2 to subject the pigment-containing water-insoluble polymer particles a1 to crosslinking reaction, thereby obtaining a pigment water dispersion (I) of pigment-containing water-insoluble polymer particles a2.

In the step 3, carbhoxy groups of the polymer a constituting the pigment-containing water-insoluble polymer particles a1 are partially or wholly crosslinked to form a crosslinked structure on a part or whole of the respective pigment-containing water-insoluble polymer particles a1. It is considered that by forming such a crosslinked structure, the polymr is firmly adsorbed and fixed onto the surface of the pigment, and the pigment is inhibited from suffering from flocculation thereof, so that the resulting ink can be further improved in storage stability and anti-color bleeding properties.

(Crosslinking Agent)

As the crosslinking agent, from the viewpoint of efficiently conducting the crosslinking reaction as well as from the viewpoint of improving storage stability of the resulting ink, preferred is a compound containing not less than 2 and not more than 6, preferably not more than 4, epoxy groups in a molecule thereof, more preferred is a compound containing not less than 2 glycidyl ether groups in a molecule thereof, and even more preferred is a polyglycidyl ether compound of a polyhydric alcohol containing a hydrocarbon group having not less than 3 and not more than 8 carbon atoms in a molecule thereof.

The molecular weight of the crosslinking agent is preferably not less than 120, more preferably not less than 150 and even more preferably not less than 200, and is also preferably not more than 2,000, more preferably not more than 1,500 and even more preferably not more than 1,000, from the viewpoint of facilitating the crosslinking reaction as well as from the viewpoint of improving storage stability of the resulting ink.

The epoxy equivalent of the crosslinking agent is preferably not less than 90, more preferably not less than 100 and even more preferably not less than 110, and is also preferably not more than 300, more preferably not more than 200 and even more preferably not more than 150.

From the viewpoint of efficiently conducting the crosslinking reaction of the carboxy groups of the polymer a with the crosslinking agent in a medium containing water as a main component, the water solubility rate of the crosslinking agent is preferably not more than 50% by mass, more preferably not more than 40% by mass and even more preferably not more than 35% by mass. The "water solubility rate" of the crosslinking agent as used herein means a rate (% by mass) of dissolution of the crosslinking agent as measured by dissolving 10 parts by mass of the crosslinking agent in 90 parts by mass of water at room temperature (25°C).

Specific examples of the crosslinking agent include polyglycidyl ethers such as polypropylene glycol diglycidyl ether (water solubility rate: 31% by mass), glycerol polyglycidyl ether, polyglycerol polyglycidyl ether, trimethylolpropane polyglycidyl ether (water solubility rate: 27% by mass), sorbitol polyglycidyl ether, pentaerythritol polyglycidyl ether (water solubility rate: 0% by mass), resorcinol diglycidyl ether, neopentyl glycol diglycidyl ether, 1,6-hexanediol diglycidyl ether, hydrogenated bisphenol A-type diglycidyl ethers, etc., and the like. Of these crosslinking agents, preferred is at least one compound selected from the group consisting of trimethylolpropane polyglycidyl ether and pentaerythritol polyglycidyl ether, and more preferred is trimethylolpropane polyglycidyl ether.

The crosslinking rate of the polymer in the step 3 as calculated in terms of a ratio of a mole equivalent number of crosslinkable functional groups of the crosslinking agent to a mole equivalent number of the carboxy groups of the polymer a is preferably not less than 10 mol%, more preferably not less than 20 mol%, even more preferably not less than 30 mol% and further even more preferably not less than 40 mol%, and is also preferably not more than 80 mol%, more preferably not more than 70 mol% and even more preferably not more than 60 mol%, from the viewpoint of improving storage srtability of the resulting ink.

From the same viewpoint as described above, the temperature used in the crosslinking treatment is preferably not lower than 40°C, more preferably not lower than 50°C and even more preferably not lower than 60°C, and is also preferably not higher than 95°C, more preferably not higher than 85°C and even more preferably not higher than 75°C.

From the viewpoint of completing the crosslinking reaction and attaining good cost efficiency, the time of the crosslinking treatment is preferably not less than 0.5 hour, more preferably not less than 1 hour and even more preferably not less than 1.5 hours, and is also preferably not more than 12 hours, more preferably not more than 10 hours, even more preferably not more than 8 hours and further even more preferably not more than 5 hours.

The solid content of the pigment water dispersion (I) is preferably not less than 10% by mass and more preferably not less than 15% by mass, and is also preferably not more than 40% by mass and more preferably not more than 35% by mass, from the viewpoint of improving dispersion stability of the pigment water dispersion (I) as well as from the viewpoint of facilitating production of the ink. The solid content may be measured by the method described in Examples below.

The content of the pigment in the pigment water dispersion (I) is preferably not less than 5% by mass, more preferably not less than 7% by mass and even more preferably not less than 10% by mass, and is also preferably not more than 40% by mass, more preferably not more than 30% by mass and even more preferably not more than 20% by mass, from the viewpoint of improving dispersion stability of the pigment water dispersion.

The mass ratio of the pigment to the polymer a [pigment/polymer a] in the pigment water dispersion (I) is preferably not less than 50/50, more preferably not less than 55/45 and even more preferably not less than 60/40, and is also preferably not more than 90/10, more preferably not more than 85/15 and even more preferably not more than 80/20.

The average particle size of the pigment particles in the pigment water dispersion (I) is preferably not less than 40 nm, more preferably not less than 50 nm, even more preferably not less than 60 nm, further even more preferably not less than 70 nm and still further even more preferably not less than 80 nm, and is also preferably not more than 200 nm, more preferably not more than 170 nm, even more preferably not more than 150 nm, further even more preferably not more than 140 nm and still further even more preferably not more than 120 nm, from the viewpoint of improving storage stability of the resulting ink.

The average particle size may be measured by the method described in Examples below.

<Pigment-Free Water-Insoluble Polymer Particles B>

The ink of the present invention preferably further contains pigment-free water-insoluble polymer particles B from the viewpoint of improving fixing properties of the resulting ink.

The pigment-free polymer particles B are preferably present in the form of a dispersion prepared by dispersing the polymer particles in a medium containing water as a main component.

From the viewpoint of improving fixing properties of the ink of the present invention, a water-insoluble polymer b constituting the pigment-free water-insoluble polymer particles B (hereinafter also referred to merely as a "polymer b") has a glass transition temperature (Tg) of not lower than 0°C and not higher than 75°C.

As the polymer b, preferred is at least one resin selected from the group consisting of an acrylic resin, a polyester resin and a polyurethane resin. Among these resins as the polymer b, more preferred is such an acrylic resin that contains a constitutional unit derived from (meth)acrylic acid (b-1) and a constitutional unit derived from a (meth)acrylic acid ester (b-2).

The term "water-insoluble" of the water-insoluble polymer b has the same definition as that of the aforementioned polymer a. The solubility of the polymer b means a solubility in water of the polymer b whose carboxy groups are neutralized completely (i.e., 100%) with sodium hydroxide.

[(Meth) acrylic Acid (b-1)]

The (meth)acrylic acid (b-1) is preferably at least one compound selected from the group consisting of acrylic acid and methacrylic acid, and more preferably methacrylic acid, from the viewpoint of improving fixing properties of the resulting ink.

[(Meth)acrylic Acid Ester (b-2)]

As the (meth)acrylic acid ester (b-2), from the viewpoint of improving fixing properties of the resulting ink, preferred is at least one compound selected from the group consisting of methyl (meth)acrylate, butyl (meth)acrylate, isobutyl (meth)acrylate, *tert*-butyl (meth)acrylate, 2-ethylhexyl (meth)acrylate and cyclohexyl (meth)acrylate, more preferred is at least one compound selected from the group consisting of methyl (meth)acrylate, butyl (meth)acrylate, 2-ethylhexyl (meth)acrylate and cyclohexyl (meth)acrylate, and even more preferred is 2-ethylhexyl (meth)acrylate.

[Aromatic Group-Containing Monomer (b-3)]

The polymer b may also further contain a constitutional unit derived from a monomer other than the aforementioned (meth)acrylic acid (b-1) and (meth)acrylic acid ester (b-2). Examples of the other monomer include an ionic monomer other than (meth)acrylic acid, an aromatic group-containing hydrophobic monomer and a nonionic monomer. Among these other monomers, preferred is the aromatic group-containing hydrophobic monomer (hereinafter also referred to merely as an "aromatic group-containing monomer (b-3)").

Specific examples of the aromatic group-containing monomer (b-3) include the aforementioned styrene-based monomer, an aromatic group-containing (meth)acrylate, an aromatic group-containing monomer-based macromonomer, and the like.

The content of the constitutional unit derived from the (meth)acrylic acid (b-1) in the polymer b is preferably not less than 1% by mass, more preferably not less than 1.5% by mass and even more preferably not less than 2% by mass, and is also preferably not more than 20% by mass, more preferably not more than 10% by mass and even more preferably not more than 5% by mass, from the viewpoint of improving fixing properties of the resulting ink.

The content of the constitutional unit derived from the (meth)acrylic acid ester (b-2) in the polymer b is preferably not less than 80% by mass, more preferably not less than 90% by mass and even more preferably not less than 95% by mass, and is also preferably not more than 99% by mass, more preferably not more than 98.5% by mass and even more preferably not more than 98% by mass, from the viewpoint of improving fixing properties of the resulting ink.

The mass ratio of the (meth)acrylic acid (b-1) to the (meth)acrylic acid ester (b-2) [(meth)acrylic acid (b-1)/(meth)acrylic acid ester (b-2)] is preferably not less than 0.01 and more preferably not less than 0.02, and is also preferably not more than 0.5, more preferably not more than 0.2 and even more preferably not more than 0.1.

The weight-average molecular weight of the polymer b is preferably not less than 10,000, more preferably not less than 50,000 and even more preferably not less than 100,000, and is also preferably not more than 2,000,000, more preferably not more than 1,500,000 and even more preferably not more than 1,200,000, from the viewpoint of improving fixing properties of the resulting ink.

The weight-average molecular weight may be measured by the method descried in Examples below.

The glass transition temperature (Tg) of the polymer b is not lower than 0°C, preferably not lower than 10°C, more preferably not lower than 20°C, even more preferably not lower than 25°C and further even more preferably not lower than 30°C, and is also not higher than 75°C, preferably not higher than 70°C and more preferably not higher than 60°C, from the viewpoint of improving fixing properties and anti-color bleeding properties of the resulting ink.

The glass transition temperature may be measured by the method descried in Examples below.

The average particle size of the pigment-free water-insoluble polymer particles B is preferably not less than 10 nm, more preferably not less than 30 nm and even more preferably not less than 50 nm, and is also preferably not more than 250 nm, more preferably not more than 200 nm and even more preferably not more than 150 nm, from the viewpoint of improving fixing properties of the resulting ink. The average particle size may be measured by the method descried in Examples below.

[Production of Pigment-Free Water-Insoluble Polymer Particles B]

As the pigment-free water-insoluble polymer particles B, there may be used either an appropriately synthesized product or a commercially available product. The pigment-free water-insoluble polymer particles B are preferably used in the form of a water dispersion liquid thereof.

Upon producing the water dispersion liquid of the pigment-free water-insoluble polymer particles B, the polymer b constituting the pigment-free water-insoluble polymer particles B is preferably neutralized with a neutralizing agent.

The water dispersion liquid of the pigment-free water-insoluble polymer particles B may be produced by such a method in which after obtaining the polymer b' as an unneutralized polymer before the neutralization by conventionally known polymerization methods, a mixture containing the polymer b' and water, if required together with a neutralizing agent, is stirred while heating, followed by cooling the mixture, and the like.

The preferred constitutional units, content, properties and the like of the polymer b' are the same as those of the polymer b. The polymer b' is preferably produced by the same polymerization method as used for the aforementioned vinyl-based resin.

The acid value of the polymer b' is preferably not less than 0 mgKOH/g, more preferably not less than 5 mgKOH/g, even more preferably not less than 10 mgKOH/g and further even more preferably not less than 15 mgKOH/g, and is also preferably not more than 200 mgKOH/g, more preferably not more than 100 mgKOH/g, even more preferably not more than 50 mgKOH/g and further even more preferably not more than 20 mgKOH/g.

The temperature used upon stirring the aforementioned mixture is preferably not lower than 60°C, more preferably not lower than 70°C and even more preferably not lower than 750°C, and is also preferably not higher than 100°C, more preferably not higher than 95°C and even more preferably not higher than 90°C. The stirring time is preferably not less than 0.5 hour and more preferably not less than 0.8 hour, and is also preferably not more than 10 hours and more preferably not more than 5 hours.

As the neutralizing agent used for producing the water dispersion liquid of the pigment-free polymer particles B, preferred are alkali metal hydroxides such as lithium hydroxide, sodium hydroxide, potassium hydroxide, etc., ammonia, organic amines, and the like, and more preferred are sodium hydroxide and triethanolamine.

The equivalent of the neutralizing agent used is not less than 0 mol%, preferably not less than 10 mol%, more preferably not less than 30 mol% and even more preferably not less than 50 mol%, and is also preferably not more than 160 mol%, more preferably not more than 130 mol% and even more preferably not more than 110 mol%, from the viewpoint of improving dispersion stability of the pigment-free polymer particles B. The equivalent of the neutralizing agent used may be determined by the aforementioned method.

[Production of Water-Based Ink]

The ink of the present invention may be efficiently produced by mixing the pigment water dispersion (I), the water dispersion liquid of the polymer particles B and the below-mentioned water-soluble organic solvent, if required together with a surfactant and further the other organic solvent(s). The method of mixing these components is not particularly limited.

<Water-Soluble Organic Solvent>

The water-soluble organic solvent used in the present invention may be kept either in a liquid state or in a solid state as measured at 25°C. However, a solubility in water of the water-soluble organic solvent as measured by dissolving the organic solvent in 100 mL of water at 25°C is not less than 10 mL.

The water-soluble organic solvent used in the present invention contains an alkanediol having not less than 3 and not more than 4 carbon atoms and a glycol ether having a boiling point that is equal to or lower than a boiling point of the alkanediol, from the viewpoint of improving fixing properties and anti-color bleeding properties of the resulting ink. In the present invention, the alkanediol having not less than 3 and not more than 4 carbon atoms is first selected, and the glycol ether is then selected by taking into account the boiling point of the alkanediol such that the boiling point of the glycol ether is equal to or lower than the boiling point of the alkanediol. The thus selected alkanediol and glycol ether are used in combination with each other.

As the alkanediol having not less than 3 and not more than 4 carbon atoms, there may be used at least one compound selected from the group consisting of 1,2-propanediol (boiling point: 188°C), 1,3-propanediol (boiling point: 210°C), 1,2-butanediol (boiling point: 192°C), 1,3-butanediol (boiling point: 207°C), 1,4-butanediol (boiling point: 230°C) and diethylene glycol (boiling point: 245°C).

The boiling points of these alkanediols lie within the temperature range of not lower than 188°C and not higher than 245°C.

Among these alkanediols, from the viewpoint of improving fixing properties and anti-color bleeding properties of the resulting ink, preferred is at least one compound selected from the group consisting of 1,2-propanediol (boiling point: 188°C), 1,3-propanediol (boiling point: 210°C) and 1,2-butanediol (boiling point: 192°C).

The glycol ether used in the present invention has a boiling point that is equal to or lower than the boiling point of the alkanediol, from the viewpoint of improving fixing properties and anti-color bleeding properties of the resulting ink.

Specific examples of the glycol ether include diethylene glycol monomethyl ether (boiling point: 194°C), diethylene glycol monoethyl ether (boiling point: 202°C), diethylene glycol monoisopropyl ether (boiling point: 207°C), diethylene glycol monobutyl ether (boiling point: 231°C), diethylene glycol monoisobutyl ether (boiling point: 230°C), triethylene glycol monomethyl ether (boiling point: 248°C), triethylene glycol monobutyl ether (boiling point: 274°C), tetraethylene glycol monomethyl ether (boiling point: 314°C), propylene glycol monomethyl ether (boiling point: 121°C), propylene glycol monoethyl ether (boiling point: 133°C), propylene glycol monopropyl ether (boiling point: 149°C), dipropylene glycol monomethyl ether (boiling point: 188°C), dipropylene glycol monobutyl ether (boiling point: 227°C), tripropylene glycol monomethyl ether (boiling point: 243°C), and the like.

Of these glycol ethers, from the viewpoint of improving fixing properties and anti-color bleeding properties of the resulting ink, preferred is at least one compound selected from the group consisting of propylene glycol monomethyl ether (boiling point: 121°C), propylene glycol monopropyl ether (boiling point: 149°C), dipropylene glycol monomethyl ether (boiling point: 188°C) and diethylene glycol monoisopropyl ether (boiling point: 207°C).

The ink of the present invention may also contain the other organic solvent(s) in addition to the aforementioned alkanediol and glycol ether , if required. Examples of the other organic solvent(s) include a polyhydric alcohol, a polyhydric alcohol alkyl ether, a nitrogen-containing heterocyclic compound, an amide, an amine, a sulfur-containing compound and the like.

Specific examples of the other organic solvent(s) include glycerin, triethylene glycol, 2-methyl-1,3-butanediol and the like.

The ink of the present invention preferably contains a surfactant from the viewpoint of improving wettability of the ink to a printing medium. In addition, the ink may also contain various additives that may be usually used in inks, such as a humectant, a wetting agent, a viscosity modifier, a defoaming agent, an antiseptic agent, a mildew-proof agent, a rust preventive, etc.

(Surfactant)

The surfactant is preferably a nonionic surfactant. From the viewpoint of maintaining adequate surface tension of the ink and thereby improving wettability of the ink to a printing medium, the surfactant is more preferably at least one surfactant selected from the group consisting of an acetylene glycol-based surfactant and a silicone-based surfactant, and it is even more preferred that the acetylene glycol-based surfactant and the silicone-based surfactant are used in combination with each other.

(Acetylene Glycol-Based Surfactant)

Examples of the acetylene glycol-based surfactant include acetylene-based diols such as 2,4,7,9-tetramethyl-5-decyne-4,7-diol, 3,6-dimethyl-4-octyne-3,6-diol, 3,5-dimethyl-1-hexyne-3-ol, 2,4-dimethyl-5-hexyne-3-ol, 2,5-dimethyl-3-hexyne-2,5-diol, 2,5,8,11-tetramethyl-6-dodecyne-5,8-diol, etc., and ethyleneoxide adducts of these compounds.

The sum (n) of average molar numbers of addition of ethyleneoxide groups (EO) in the aforementioned ethyleneoxide adducts is preferably not less than 1 and more preferably not less than 1.5, and is also preferably not more than 20 and more preferably not more than 10.

Examples of commercially available products of the acetylene glycol-based surfactant include "SURFYNOL" series products and "OLFINE" series products both available from Nissin Chemical Co., Ltd., and "ACETYLENOL" series products available from Kawaken Fine Chemicals Co., Ltd., and the like. Of these commercially available products of the acetylene glycol-based surfactant, preferred are "SURFYNOL 420" (n: 1.3), "SURFYNOL 440" (n: 3.5), "SURFYNOL 465" (n: 10.0), "SURFYNOL 485" (n: 30.0), "OLFINE E1010", "ACETYLENOL E100", "ACETYLENOL E200", "ACETYLENOL E40" (n: 4), "ACETYLENOL E60" (n: 6), "ACETYLENOL E81" (n: 8), "ACETYLENOL E100" (n: 10), and the like.

(Silicone-Based Surfactant)

Examples of the silicone-based surfactant include dimethyl polysiloxane, a polyether-modified silicone, an amino-modified silicone, a carboxy-modified silicone, and the like. Of these silicone-based surfactants, from the same viewpoint as described above, preferred is the polyether-modified silicone.

The polyether-modified silicone-based surfactant has such a structure that a hydrocarbon group bonded to a side chain and/or a terminal end of a silicone oil is substituted with a polyether group. Examples of the suitable polyether group include a polyethyleneoxy group, a polypropyleneoxy group and a polyalkyleneoxy group formed by addition-bonding an ethyleneoxy group (EO) and a propyleneoxy group (PO) to each other in a block form or a random form. More specifically, as the polyether-modified silicone-based surfactant, there may be used a compound formed by grafting a polyether group to a main chain of a silicone, a compound formed by bonding a silicone and a polyether group to each other in a block form, and the like.

The HLB (hydrophile lipophile balance) value of the polyether-modified silicone-based surfactant is preferably not less than 2, more preferably not less than 3 and even more preferably not less than 4 from the viewpoint of improving solubility of the polyether-modified silicone-based surfactant in the ink. The term "HLB value" as used herein may be measured by a Griffin method.

In addition, the kinematic viscosity of the polyether-modified silicone-based surfactant as measured at 25°C is preferably not less than 50 mm$^2$/s and more preferably not less than 80 mm$^2$/s, and is also preferably not more than 500 mm$^2$/s and more preferably not more than 300 mm$^2$/s. Meanwhile, the kinematic viscosity may be measured using a Ubbelohde viscometer.

Specific examples of commerxially avaulable products of the polyether-modified silicone-based surfactant include "KF" series products available from Shin-Etsu Chemical Co., Ltd., such as "KF-353", "KF-355A", "KF-642", etc.; "SILFACE SAG005" available from Nissin Chemical Co., Ltd.,; "FZ-2191" available from NUC Co., Ltd.; "BYK-348" available from BYK Chemie Japan K.K.; and the like.

The contents of the respective components in the ink of the present invention as well as properties of the ink are as follows.

(Content of Pigment)

The content of the pigment in the ink of the present invention is preferably not less than 1% by mass, more preferably not less than 3% by mass and even more preferably not less than 5% by mass from the viewpoint of enhancing optical density of the ink, and is also preferably not more than 15% by mass, more preferably not more than 10% by mass and even more preferably not more than 7% by mass from the viewpoint of reducing viscosity of the ink upon volatilizing the solvent therefrom as well as from the viewpoint of improving storage stability of the ink.

(Content of Pigment-Containing Water-Insoluble Polymer Particles A)

The content of the pigment-containing polymer particles A in the ink of the present invention is preferably not less than 3% by mass, more preferably not less than 5% by mass and even more preferably not less than 7% by mass from the viewpoint of enhancing optical density of the ink, and is also preferably not more than 15% by mass, more preferably not more than 13% by mass and even more preferably not more than 10% by mass from the viewpoint of improving storage stability of the ink.

(Content of Pigment-Free Water-Insoluble Polymer Particles B)

The content of the pigment-free water-insoluble polymer particles B in the ink of the present invention is preferably not less than 0.3% by mass, more preferably not less than 1% by mass and even more preferably not less than 2% by mass from the viewpoint of improving fixing properties of the ink, and is also preferably not more than 7% by mass, more preferably not more than 5% by mass and even more preferably not more than 3% by mass from the viewpoint of reducing viscosity of the ink upon volatilizing the solvent therefrom as well as from the viewpoint of improving storage stability and re-dispersibility of the ink.

(Content of Water-Soluble Organic Solvent)

The content of the water-soluble organic solvent in the ink of the present invention is preferably not less than 5% by mass, more preferably not less than 10% by mass and even more preferably not less than 15% by mass, and is also preferably not more than 50% by mass, more preferably not more than 45% by mass and even more preferably not more than 40% by mass, from the viewpoint of improving fixing properties and anti-color bleeding properties of the ink.

(Difference in Boiling Point between Water-Soluble Organic Solvents)

In the ink of the present invention, the boiling point of the glycol ether is preferably equal to or lower than the boiling point of the alkanediol having not less than 3 and not more than 4 carbon atoms. From the viewpoint of improving wettability of the ink to a printing medium, the boiling point of the glycol ether is more preferably lower by 20°C and even more preferably lower by 40°C than the boiling point of the alkanediol having not less than 3 and not more than 4 carbon atoms.

(Content of Surfactant)

The content of the surfactant in the ink of the present invention is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of the ink to a printing medium.

The content of the acetylene glycol-based surfactant in the ink of the present invention is preferably not less than 0.2% by mass, more preferably not less than 0.4% by mass and even more preferably not less than 0.6% by mass, and is also preferably not more than 4% by mass, more preferably not more than 3% by mass and even more preferably not more than 2% by mass, from the same viewpoint as described above.

The content of the silicone-based surfactant in the ink of the present invention is preferably not less than 0.01% by mass, more preferably not less than 0.03% by mass and even more preferably not less than 0.05% by mass, and is also preferably not more than 3% by mass, more preferably not more than 2% by mass and even more preferably not more than 1% by mass, from the same viewpoint as described above.

(Content of Water)

The content of water in the ink of the present invention is preferably not less than 30% by mass, more preferably not less than 40% by mass and even more preferably not less than 50% by mass, and is also preferably not more than 90% by mass, more preferably not more than 80% by mass and even more preferably not more than 70% by mass, from the viewpoint of improving storage stability and anti-color bleeding properties of the ink.

(Mass Ratio of (Pigment-Containing Water-Insoluble Polymer Particles A/Whole Water-Soluble Organic Solvents))

The mass ratio of the pigment-containing water-insoluble polymer particles A to the whole water-soluble organic solvents (pigment-containing water-insoluble polymer particles A/whole water-soluble organic solvents) is preferably not less than 0.05, more preferably not less than 0.1 and even more preferably not less than 0.12, and is also preferably not more than 0.5, more preferably not more than 0.45 and even more preferably not more than 0.4, from the viewpoint of improving fixing properties and anti-color bleeding properties of the ink.

(Properties of Ink of Present Invention)

The viscosity of the ink of the present invention as measured at 32°C is preferably not less than 2 mPa • s, more preferably not less than 3 mPa • s and even more preferably not less than 5 mPa • s, and is also preferably not more than 12 mPa • s, more preferably not more than 9 mPa • s and even more preferably not more than 7 mPa • s, from the viewpoint of improving storage stability and anti-color bleeding properties of the ink.

The viscosity of the ink of the present invention may be measured by the method described in Examples below.

The pH value of the ink of the present invention is preferably not less than 7.0, more preferably not less than 7.2 and even more preferably not less than 7.5, and is also preferably not more than 11, more preferably not more than 10 and even more preferably not more than 9.5, from the viewpoint of improving storage stability of the ink as well as from the viewpoint of improving the resistance of members to the ink and suppressing skin irritation.

The ink of the present invention is especially suitable for printing for soft packaging. Incidentally, the term "printing for soft packaging" as used therein means such a printing operation that is conducted on a single member formed of a thin flexible material, such as a resin film, etc., or a laminated member formed thereof. The printed material obtained by conducting the printing for soft packaging using the ink of the present invention is suitably used in the applications of packaging of foods, living wares, etc.

The inks of the present invention are preferably used in combination with each other to provide a set of the inks, which can be suitably used for full color printing.

[Ink-Jet Printing Method]

The ink-jet printing method of the present invention is a printing method of printing characters or images on a low-liquid absorbing printing medium using the ink of the present invention. The ink of the present invention may be loaded to a conventionally known ink-jet printing apparatus from which droplets of the ink are ejected onto the low-liquid absorbing printing medium to print characters or images, etc., on the printing medium.

(Low-Liquid Absorbing Printing Medium)

Examples of the low-liquid absorbing printing medium include a low-liquid absorbing coated paper and a resin film.

Examples of the coated paper include a versatile glossy coated paper, a multi-color foam glossy coated paper, and the like.

As the resin film, there may be mentioned a transparent synthetic resin film. Examples of the resin film include a polyester film, a polyvinyl chloride film, a polypropylene film, a polyethylene film, a nylon film and the like. These resin films may be in the form of either a biaxially oriented film, a monoaxially oriented film or a non-oriented film. Among these resin films, preferred are a polyester film and an oriented polypropylene film, and more preferred are a polyester film such as a polyethylene terephthalate (PET) film subjected to corona discharge treatment, etc., and an oriented polypropylene film such as a biaxially oriented polypropylene (OPP) film subjected to corona discharge treatment, etc.

(Ink-Jet Printing Apparatus)

As the ink-jet printing apparatus, there may be used either a thermal type ink-jet printer or a piezoelectric type ink-jet printer. Among these ink-jet printing apparatuses, preferred is a piezoelectric type ink-jet printer. In the piezoelectric type ink-jet printer, a number of nozzles are communicated with respective pressure chambers, and droplets of the ink are ejected from the nozzles by vibrating a wall surface of the respective pressure chambers by means of a piezoelectric element.

The voltage applied to a print head of the ink-jet printing apparatus is preferably not less than 5 V, more preferably not less than 10 V and even more preferably not less than 15 V, and is also preferably not more than 40 V, more preferably not more than 35 V and even more preferably not more than 30 V, from the viewpoint of conducting high-speed printing with high efficiency, etc.

The drive frequency of the ink-jet printing apparatus is preferably not less than 2 kHz, more preferably not less than 5 kHz and even more preferably not less than 8 kHz, and is also preferably not more than 80 kHz, more preferably not more than 70 kHz and even more preferably not more than 60 kHz, from the viewpoint of conducting high-speed printing with high efficiency, etc.

The amount of droplets of the ink ejected is preferably not less than 0.5 pL, more preferably not less than 1.0 pL, even more preferably not less than 1.5 pL and further even more preferably not less than 1.8 pL, and is also preferably not more than 20 pL, more preferably not more than 15 pL and even more preferably not more than 13 pL, as calculated per one ink droplet ejected, from the viewpoint of maintaining accuracy of impact positions of the ink droplets and improving quality of printed characters or images.

The print head resolution is preferably not less than 400 dpi (dot/inch), more preferably not less than 500 dpi and even more preferably not less than 550 dpi.

The temperature of a surface of the printing medium (a surface temperature of a region of the printing medium opposed to a region of the printing head from which the ink is ejected) is preferably not higher than 70°C, more preferably not higher than 65°C, even more preferably not higher than 60°C and further even more preferably not higher than 55°C from the viewpoint of suppressing thermal deformation of the resulting printed material and saving an energy consumed, and is also not lower than 30°C, more preferably not lower than 35°C, even more preferably not lower than 40°C and further even more preferably not lower than 45°C from the viewpoint of preventing occurrence of color bleeding of the ink.

The temperature of the printing medium may be controlled by adjusting a temperature of an under heater disposed on a rear side of the printing medium which was opposed to the print head. In the case where a plurality of print heads are provided, it is preferred that a plurality of under heaters are disposed at positions opposed to the respective print heads.

The printing speed is preferably not less than 10 m/min, more preferably not less than 15 m/min and even more preferably not less than 20 m/min in terms of a transportation speed of the printing medium in the direction along which the printing medium is moved, from the viewpoint of enhancing productivity of printed materials, and is also preferably not more than 150 m/min in terms of a transportation speed of the printing medium from the viewpoint of improving operability of the apparatus.

In the ink-jet printing method, in order to prevent occurrence of color bleeding of droplets of respective inks even in the case where after ejecting one kind of ink to the printing medium to print characters or images thereon, the next ink is successively ejected thereon, there may also be disposed a fixing and curing means for applying a heat energy thereto, such as a heater, etc.

EXAMPLES

In the following Preparation Examples, Production Examples, Examples and Comparative Examples, the "part(s)" and "%" indicate "part(s) by mass" and "% by mass", respectively, unless otherwise specified.

(1) Measurement of Number-Average Molecular Weight and Weight-Average Molecular Weight of Polymer

The number-average molecular weight and weight-average molecular weight of the polymer were measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in *N,N*-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (formed of PTFE; 0.2 $\mu$m) available from Advantec Co., Ltd.

(2) Measurement of Average Particle Sizes of Pigment-Containing Water-Insoluble Polymer Particles A and Polymer Particles B

The cumulant analysis of the particles was conducted using a laser particle analyzing system "ELS-8000" available from Otsuka Electrics Co., Ltd., to measure an average particle size thereof. In the measurement, there was used a dispersion liquid diluted with water such that a concentration of the particles in the dispersion liquid was adjusted to $5 \times 10^{-3}$% by weight (in terms of a solid content thereof). The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing water-insoluble polymer particles A and the water-insoluble polymer particles B.

(3) Measurement of Solid Content

Sodium sulfate dried to constant weight in a desiccator was weighed in an amount of 10.0 g and charged into a 30 mL polypropylene container ($\phi$: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator adjusted to room temperature (25°C) for 15 minutes to measure a mass thereof. The mass of the sample after removing the volatile components therefrom was regarded as a mass of solids therein. The solid content of the sample was calculated by dividing the mass of the solids by the mass of the sample initially added.

(4) Measurement of Glass Transition Temperature (Tg) of Water-Insoluble Polymer

Using a differential scanning calorimeter "Q100" available from TA Instruments Japan Inc., a sample to be measured was heated to 200°C and then cooled from 200°C to 0°C at a temperature drop rate of 10°C/minute. Then, the sample was further heated at a temperature rise rate of 10°C/minute until reaching 200°C to measure an endothermic curve thereof.

Among the endothermic peaks observed in the thus measured characteristic curve, the temperature of the peak having a largest peak area was defined as an endothermic maximum peak temperature which was regarded as a glass transition temperature (Tg) of the sample.

(5) Measurement of Water Solubility Rate of Epoxy Compound

A glass tube (25 mm$\phi$ in diameter x 250 mm in height) was charged with 90 parts by mass of ion-exchanged water and 10 parts by mass (W1) of an epoxy compound at room temperature (25°C). The glass tube thus charged was allowed to stand for 1 hour in a thermostatic bath adjusted to a water temperature of 25°C. Next, the contents of the glass tube were vigorously shaken for 1 minute, and then the glass tube was placed again in the thermostatic bath, followed by allowing the glass tube to stand in the thermostatic bath for 12 hours. Then, undissolved components that were separated from water and precipitated or floated in the dispersion were recovered therefrom and then dried at 40°C under the environmental condition of a gauge pressure of -0.08 MPa for 6 hours, followed by measuring a mass (W2) of the thus dried product. The water solubility rate (% by mass) of the epoxy compound was calculated according to the following formula.

$$\text{Water Solubility Rate (\% by mass)} = \{(W1 - W2)/W1\} \times 100$$

(6) Measurement of Boiling Point of Organic Solvent

The boiling point of the organic solvent was measured according to JIS K2254, and an initial boiling point of the organic solvent thus meaured was defiend as the boiling point (bp) of the organic solvent.

(7) Measurement of Viscosity of Ink

The viscosity of the ink was measured using an E-type viscometer "RE80L" available from Toki Sangyo Co., Ltd., equipped with a standard rotor (1°34' x R24) under the conditions including a measuring temperature of 32°C and a measuring time of 1 minute. The rotating speed of the rotor was adjusted to a largest one among measurable rotating speeds with the proviso that the maximum rotating speed was 100 rpm.

Production Example 1 (Production of Solution of Water-Insoluble Polymer a)

A monomer mixed solution was prepared by mixing 61.1 parts of acrylic acid available from FUJIFILM Wako Pure Chemical Corporation, 128.8 parts of styrene available from FUJIFILM Wako Pure Chemical Corporation and 9.6 parts of $\alpha$-methyl styrene available from FUJIFILM Wako Pure Chemical Corporation with each other. A reaction vessel was charged with 20 parts of methyl ethyl ketone (MEK) available from FUJIFILM Wako Pure Chemical Corporation and 0.3 part of a polymerization chain transfer agent (2-mercaptoethanol) available from FUJIFILM Wako Pure Chemical Corporation as well as 10% of the monomer mixed solution prepared above, and then an inside atmosphere of the reaction vessel was fully replaced with nitrogen gas.

On the other hand, a mixed solution prepared by mixing remaining 90% of the monomer mixed solution, 0.27 part of the aforementioned polymerization chain transfer agent, 60 parts of MEK and 2.2 parts of an azo-based radical polymerization initiator "V-65" (2,2'-azobis(2,4-dimethylvaleronitrile)) available from FUJIFILM Wako Pure Chemical Corporation was charged into a dropping funnel. In a nitrogen atmosphere, the aforementioned monomer mixed solution in the reaction vessel was heated to 65°C while stirring, and then the mixed solution in the dropping funnel was added dropwise into the reaction vessel over 3 hours. After the elapse of 2 hours from completion of the dropwise addition while maintaining the resulting mixed solution at 65°C, a solution prepared by dissolving 0.3 part of the aforementioned polymerization initiator in 5 parts of MEK was added to the reaction vessel, and the resulting reaction solution was further aged at 65°C for 2 hours and then at 70°C for 2 hours, thereby obtaining a solution of a carboxy group-containing water-insoluble polymer a (number-average molecular weight of the polymer a: 10500).

Preparation Example 1 (Preparation of Water Dispersion of Black Pigment-Containing Water-Insoluble Polymer Particles A1)

(1) A polymer produced by drying the solution of the water-insoluble polymer a obtained in Production Example 1 under reduced pressure was weighed in an amount of 58.1 parts and mixed with 71.5 parts of MEK, and then 23.6 parts of a 5N sodium hydroxide aqueous solution (content of sodium hydroxide as solid components: 16.9%; for volumetric titration) available from FUJIFILM Wako Pure Chemical Corporation were further added to the resulting mixed solution to thereby neutralize the polymer such that the ratio of the number of moles of sodium hydroxide to the number of moles of carboxy groups of the polymer was 40 mol% (neutralization degree: 40 mol%). Furthermore, 695.1 parts of ion-exchanged water were added to the resulting mixed solution, and 200 g of a pigment "MONARCH 717" (C.I. Pigment Black 7) available from Cabot Corporation was added to the mixed solution. The resulting dispersion was stirred at 20°C for 60 minutes using a disper "ULTRA DISPER" (tradename) available from Asada Iron Works Co., Ltd., while operating a disper blade thereof at a rotating speed of 7000 rpm.

The resulting mixture was subjected to dispersion treatment using "Microfluidizer" (tradename) available from Microfluidics Corporation under a pressure of 150 MPa by passing the mixture through the device 9 times.

(2) A 2 L eggplant-shaped flask was charged with 1000 g of the dispersion treatment product obtained in the above (1), and then 666.7 g of ion-exchanged water was added thereto (solid content: 15.0% by mass). The resulting mixture was maintained under a pressure of 0.09 MPa in a warm water bath adjusted to 32°C for 3 hours using a rotary distillation apparatus "Rotary Evaporator N-1000S" available from Tokyo Rikakikai Co., Ltd., operated at a rotating speed of 50 rpm to remove the organic solvent therefrom. Moreover, the temperature of the warm water bath was adjusted to 62°C, and the pressure in the apparatus was reduced to 0.07 MPa, and the reaction solution was concentrated under this condition until a solid content of the obtained reaction solution reached 25.0% by mass.

(3) The thus obtained concentrated solution was charged into a 500 mL-capacity angle rotor, and subjected to centrifugal separation using a high-speed cooling centrifuge "himac CR22G" (temperature set: 20°C) available from Hitachi Koki Co., Ltd., at 7000 rpm for 20 minutes. Thereafter, the liquid layer portion thus separated from the concentrated solution was subjected to filtration treatment through a 5 $\mu$m-mesh membrane filter "Minisart" available from Sartorius Inc.

Four hundred grams of the resulting filtrate (C.I. Pigment Black 7: 76.0 g; the aforementioned water-insoluble polymer a: 22.1 g) were mixed with 61.61 g of ion-exchanged water and then with 1.08 g of "Ploxel LVS" (mildew-proof agent; active ingredient content: 20%) available from Arch Chemicals Japan, Inc., and further mixed with 5.20 g of a crosslinking agent "DENACOL EX-321L" (trimethylolpropane polyglycidyl ether; epoxy equivalent: 129; water solubility rate: 27% by mass) available from Nagase ChemteX Corporation, followed by stirring the resulting mixture at 70°C for 3 hours. The obtained reaction solution was cooled to 25°C, and then subjected to filtration treatment through the aforementioned 5 $\mu$m-mesh filter. Furthermore, the obtained filtered product was mixed with ion-exchanged water so as to adjust a solid content of the resulting mixture to 18% by mass, thereby obtaining a water dispersion of black pigment-containing water-insoluble polymer particles A1.

The average particle size of the pigment-containing water-insoluble polymer particles A1 in the thus obtained water dispersion was 90 nm.

Preparation Example 2 (Preparation of Water Dispersions A2 to A4 of Yellow Pigment-, Red Pigment- and Cyan Pigment-Containing Water-Insoluble Polymer Particles A2 to A4)

The same procedure as in Preparation Example 1 was repeated except that "C.I. Pigment Black 7" used in Preparation Example 1 was replaced with "C.I. Pigment Yellow 74", "C.I. Pigment Red 122" and "C.I. Pigment Blue 15:3", respectively, thereby obtaining respective pigment water dispersions of yellow pigment-containing water-insoluble polymer particles A2, red pigment-containing water-insoluble polymer particles A3 and cyan pigment-containing water-insoluble polymer particles A4.

The average particle sizes of the pigment-containing water-insoluble polymer particles A2 to A4 in the thus obtained water dispersions was 95 nm, 100 nm and 110 nm, respectively.

Production Examples 2 to 4 (Production of Water Dispersions of Pigment-Free Water-Insoluble Polymer Particles B1 to B3)

A reaction vessel equipped with a dropping funnel was charged with the monomers, "LATEMUL E-118B" (surfactant; sodium polyoxyethylenealkylethersulfate) available from Kao Corporation, potassium persulfate as a polymerization initiator available from FUJIFILM Wako Pure Chemical Corporation and ion-exchanged water as shown in "Initially Charged Monomer Solution" in Table 1, followed by mixing the contents of the reaction vessel with each other. Then, an inside atmosphere of the reaction vessel was replaced with nitrogen gas, thereby obtaining an initially charged monomer solution. In addition, the monomers, surfactant, polymerization initiator and ion-exchanged water as shown in "Dropping Monomer Solution" in Table 1 were mixed with each other to prepare a dropping monomer solution. The resulting dropping monomer solution was charged into the dropping funnel, and an inside atmosphere of the dropping funnel was replaced with nitrogen gas.

In a nitrogen atmosphere, the initially charged monomer solution in the reaction vessel was heated from room temperature to 80°C over 30 minutes while stirring, and while maintaining the initially charged monomer solution at 80°C, the monomers in the dropping funnel were gradually added dropwise to the reaction vessel over 3 hours. After completion of the dropwise addition, while maintaining the inside temperature of the reaction vessel, the contents of the reaction vessel were stirred for 1 hour. Then, the resulting dispersion was filtered through a 200-mesh filter, thereby obtaining water dispersions of pigment-free water-insoluble polymer particles B1 to B3 (solid content: 44.1%; average particle size: 75 to 120 nm).

The weight-average molecular weights and glass transition temperatures (Tg) of the polymers b1 to b3 constituting the thus obtained pigment-free water-insoluble polymer particles B1 to B3, respectively, are shown in Table 1.

The acid values of the polymers b1 to b3 fell in the range of 10 to 20 mgKOH/g.

# EP 3 904 474 A1

TABLE 1

| | | Production Examples | | |
|---|---|---|---|---|
| | | 2 | 3 | 4 |
| Kind of water-insoluble polymer particles B | | B1 | B2 | B3 |
| Initially charged monomer solution (part(s)) | Methacrylic acid | 0.5 | 0.5 | 0.5 |
| | Methyl methacrylate | 14.5 | 8.5 | 19.5 |
| | 2-Ethylhexyl acrylate | 5.0 | 11.0 | 0.0 |
| | "LATEMUL E-118B"*1 | 11.1 | 11.1 | 11.1 |
| | Ion-exchanged water | 382.8 | 382.8 | 382.8 |
| | Potassium persulfate | 0.2 | 0.2 | 0.2 |
| Dropping monomer solution (part(s)) | Methacrylic acid | 9.5 | 9.5 | 9.5 |
| | Methyl methacrylate | 275.5 | 161.5 | 370.5 |
| | 2-Ethylhexyl acrylate | 95.0 | 209.0 | 0.0 |
| | "LATEMUL E-118B"*1 | 35.1 | 35.1 | 35.1 |
| | Ion-exchanged water | 183.0 | 183.0 | 183.0 |
| | Potassium persulfate | 0.6 | 0.6 | 0.6 |
| Weight-average molecular weight | | 700,000 | 750,000 | 500,000 |
| Glass transition temperature (Tg) | | 50°C | -3°C | 107°C |
| Note: *1: Emulsifier (sodium polyoxyethylenealkylethersulfate) available from Kao Corporation | | | | |

Example 1 (Production of Water-Based Inks and Ink Set)

The water dispersion of the black pigment-containing water-insoluble polymer particles A1 obtained in Preparation Example 1 (solid content: 18% by mass; pigment: 13% by mass; polymer: 5% by mass) in an amount of 44.4 g was mixed with 11.3 g of the water dispersion of the pigment-free water-insoluble polymer particles B1 obtained in Production Example 2 (solid content: 44.1%), 15.0 g of 1,2-propanediol available from FUJIFILM Wako Pure Chemical Corporation, 15.0 g of propylene glycol monomethyl ether available from FUJIFILM Wako Pure Chemical Corporation, 1.0 g of an acetylene glycol-based surfactant "SURFYNOL 440" (an ethyleneoxide (40%) adduct of "SURFYNOL 104"; average molar number of addition of ethyleneoxide: 3.5) available from Nissin Chemical Co., Ltd., and 0.2 g of a polyether-modified silicone-based surfactant "SILFACE SAG005" (wetting agent; HLB: 7; kinematic viscosity: 170 mm$^2$/s (25°C)) available from Nissin Chemical Co., Ltd., and further mixed with ion-exchanged water such that a total amount of the resulting mixture was 100 g, thereby obtaining a black ink 1-1.

In addition, the same procedure as mentioned above was repeated except that the black pigment-containing water-insoluble polymer particles A1 were replaced with the yellow pigment-, red pigment- and cyan pigment-containing water-insoluble polymer particles A2 to A4, respectively, thereby obtaining a yellow ink 1-2, a red ink 1-3 and a cyan ink 1-4, respectively.

The thus obtained 4 color inks were combined together to obtain an ink set.

Examples 2 to 10 and Comparative Examples 1 to 7 (Production of Water-Based Inks and Ink Sets)

The same procedure as in Example 1 was repeated except that the compositions of the respective inks and ink set obtained in Example 1 were changed to those shown in Tables 2 and 3, thereby obtaining respective inks and ink sets of Examples 2 to 10 and Comparative Examples 1 to 7.

Incidentally, the amounts of the respective components shown in Tables 2 and 3 are amounts of solid components therein.

Using the thus obtained inks and ink sets, ink-jet printing was conducted by the following method, and then the resulting printed materials were evaluated for color bleeding and fixing properties.

(Ink-Jet Printing Method)

Under the environmental conditions of a temperature of 25±1°C and a relative humidity of 30±5%, the respective ink sets were loaded into a one pass-type print evaluation apparatus available from Trytech Co., Ltd., equipped with ink-jet print heads "KJ4B-HD06MHG-STDV" (piezoelectric type) available from Kyocera Corporation. These ink-jet print heads were sequentially disposed in the print evaluation apparatus in the order of the black ink, the cyan ink, the red ink and the yellow ink from an upstream side of the feeding direction of a printing medium. At this time, the ink-jet print heads respectively loaded with the black ink, the cyan ink, the red ink and the yellow ink were mounted in the print evaluation apparatus such that the ink-jet print heads were spaced at a distance of 55 cm apart from each other.

The operating conditions of the print evaluation apparatus were set to an applied head voltage of 26 V, a drive frequency of 10 kHz, an ejected ink droplet amount of 3 pL, a print head temperature of 32°C, a print head resolution of 600 dpi, the number of ink shots for flushing before being ejected of 200 shots and a negative pressure of -4.0 kPa, and the printing medium was fixed on the print evaluation apparatus such that the longitudinal direction of the printing medium was aligned with a transportation direction thereof. As the printing medium, there were used an OPP film "FOR-AQ" (one surface of which had been subjected to corona discharge treatment) available from Futamura Chemical Co., Ltd., and a PET film "FE2001" (one surface of which had been subjected to corona discharge treatment) available from Futamura Chemical Co., Ltd.

An A4-size film heater available from Kawai Corporation was fixedly mounted to a transportation table for the printing medium so as to heat the printing medium. The temperature of the film heater was controlled to 40°C, and the transportation speed of the printing medium was controlled to 25 m/min.

A printing command was transmitted to the aforementioned print evaluation apparatus to sequentially eject the black ink, the cyan ink, the red ink and the yellow ink in this order to print a pattern shown in FIG. 1 such that specific two color solid images among respective color solid images (100% Duty) were crossed at right angles and overlapped with each other as shown in FIG. 1. Thereafter, the thus obtained print pattern was dried by a hot air dryer at 60°C for 5 seconds, thereby obtaining a printed material.

The resulting printed material was subjected to evaluation of color bleeding by the following method.

(Evaluation of Color Bleeding of Printed Material)

In a portion of the printed material where the printed two solid images having different colors were crossed at right angles and overlapped with each other, which was likely to suffer from color bleeding, the width of a bleed portion of one of the two color solid images which was protruded from the perpendicularly crossed portion of the two color solid images and intruded into the other of the two color solid images was measured. The widths of the protruded bleed portions were measured with respect to each combination of the respective films and the respective two color solid images to calculate an average value thereof. The degrees of color bleeding between the different two color solid images on the respective films were compared with each other on the basis of the thus obtained average value, and evaluated according to the following evaluation ratings.

(Evaluation Ratings)

5: The average value of the widths of the protruded bleed portions was less than 120 μm, and substantially no color bleeding was recognized.

4: The average value of the widths of the protruded bleed portions was not less than 120 μm and less than 150 μm, and no remarkable color bleeding was recognized, so that the resulting printed material was usable in practical applications without problems.

3: The average value of the widths of the protruded bleed portions was not less than 150 μm and less than 200 μm, and although slight color bleeding was recognized, the resulting printed material was still usable in practical applications without problems.

2: The average value of the widths of the protruded bleed portions was not less than 200 μm and less than 300 μm, and color bleeding clearly occurred so that the resulting printed material was unusable in practical applications.

1: The average value of the widths of the protruded bleed portions was not less than 300 μm, and color bleeding clearly occurred so that the resulting printed material was unusable in practical applications.

The resulting printed material was subjected to evaluation of fixing properties by the following method.

(Evaluation of Fixing Properties of Printed Material)

A tape "CELLOTAPE (registered trademark) CT-18S" having a width of 18 mm available from Nichiban Co., Ltd., was attached onto each color solid image portion of the resulting print pattern shown in FIG. 1 (a portion except for the perpendicularly crossed portion and neighborhoods thereof, where no color bleeding occurred). Then, the tape was peeled off from the solid image portion, and then the surface condition of the solid image portion from which the tape had been peeled off was observed to evaluate adhesion properties thereof according to the following evaluation ratings. The average value of scores of the evaluation ratings of the respective colors on the respective films was calculated, and the numerical values obtained by rounding the thus determined average values to the nearest whole number are shown in Tables 2 and 3.

(Evaluation Ratings)

5: No peeling of the solid image portion occurred.
4: Peeled area of the solid image portion was less than 10%.
3: Peeled area of the solid image portion was not less than 10% and less than 30%.
2: Peeled area of the solid image portion was not less than 30% and less than 80%.
1: Peeled area of the solid image portion was not less than 80%.

EP 3 904 474 A1

TABLE 2-1

| | | | Examples | | | | | | | | | | | | | | | | | | | | |
| | | | 1 | | | | 2 | | | | 3 | | | | 4 | | | | 5 | | | |
| | | | 1-1 | 1-2 | 1-3 | 1-4 | 2-1 | 2-2 | 2-3 | 2-4 | 3-1 | 3-2 | 3-3 | 3-4 | 4-1 | 4-2 | 4-3 | 4-4 | 5-1 | 5-2 | 5-3 | 5-4 |
|---|---|---|---|---|---|---|---|---|---|---|---|---|---|---|---|---|---|---|---|---|---|---|
| Water dispersion of particles A | Black pigment-containing water-insoluble polymer particles A1 | | 8.0 | | | | 8.0 | | | | 8.0 | | | | 8.0 | | | | 8.0 | | | |
| | Yellow pigment-containing water-insoluble polymer particles A2 | | | 8.0 | | | | 8.0 | | | | 8.0 | | | | 8.0 | | | | 8.0 | | |
| | Red pigment-containing water-insoluble polymer particles A3 | | | | 8.0 | | | | 8.0 | | | | 8.0 | | | | 8.0 | | | | 8.0 | |
| | Cyan pigment-containing water-insoluble polymer particles A4 | | | | | 8.0 | | | | 8.0 | | | | 8.0 | | | | 8.0 | | | | 8.0 |
| Water dispersion of particles B | Pigment-free water-insoluble polymer particles B1 | Tg: 50°C | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | Pigment-free water-insoluble polymer particles B2 | Tg: -3°C | | | | | | | | | | | | | | | | | | | | |
| | Pigment-free water-insoluble polymer particles B3 | Tg: 107°C | | | | | | | | | | | | | | | | | | | | |
| Alkanediol | 1,2-Propanediol | bp: 188°C | 15.0 | 15.0 | 15.0 | 15.0 | | | | | | | | | 15.0 | 15.0 | 15.0 | 15.0 | | | | |
| | 1,2-Butanediol | bp: 192°C | | | | | 15.0 | 15.0 | 15.0 | 15.0 | | | | | | | | | 15.0 | 15.0 | 15.0 | 15.0 |
| | 1,3-Propanediol | bp: 210°C | | | | | | | | | 15.0 | 15.0 | 15.0 | 15.0 | | | | | | | | |
| Glycol ether | Propylene glycol monomethyl ether | bp: 121°C | 15.0 | 15.0 | 15.0 | 15.0 | 15.0 | 15.0 | 15.0 | 15.0 | 15.0 | 15.0 | 15.0 | 15.0 | | | | | | | | |
| | Propylene glycol monopropyl ether | bp: 149°C | | | | | | | | | | | | | 15.0 | 15.0 | 15.0 | 15.0 | 15.0 | 15.0 | 15.0 | 15.0 |
| | Dipropylene glycol monomethyl ether | bp: 188°C | | | | | | | | | | | | | | | | | | | | |
| | Diethylene glycol isopropyl ether | bp: 207°C | | | | | | | | | | | | | | | | | | | | |
| Surfactant | Acetylene glycol-based surfactant | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Silicone-based surfactant | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Evaluation results | Fixing properties (PET) | | 5 | | | | 5 | | | | 5 | | | | 4 | | | | 4 | | | |
| | Anti-color bleeding properties (PET) | | 5 | | | | 5 | | | | 5 | | | | 4 | | | | 4 | | | |
| | Fixing properties (OPP) | | 5 | | | | 4 | | | | 4 | | | | 4 | | | | 3 | | | |
| | Anti-color bleeding properties (OPP) | | 5 | | | | 4 | | | | 4 | | | | 4 | | | | 4 | | | |

22

TABLE 2-2

| | | | Examples | | | | | | | | | | | | | | | | | | | |
|---|---|---|---|---|---|---|---|---|---|---|---|---|---|---|---|---|---|---|---|---|---|---|
| | | | 6 | | | | 7 | | | | 8 | | | | 9 | | | | 10 | | | |
| | | | 6-1 | 6-2 | 6-3 | 6-4 | 7-1 | 7-2 | 7-3 | 7-4 | 8-1 | 8-2 | 8-3 | 8-4 | 9-1 | 9-2 | 9-3 | 9-4 | 10-1 | 10-2 | 10-3 | 10-4 |
| Water dispersion of particles A | Black pigment-containing water-insoluble polymer particles A1 | | 8.0 | | | | 8.0 | | | | 8.0 | | | | 8.0 | | | | 8.0 | | | |
| | Yellow pigment-containing water-insoluble polymer particles A2 | | | 8.0 | | | | 8.0 | | | | 8.0 | | | | 8.0 | | | | 8.0 | | |
| | Red pigment-containing water-insoluble polymer particles A3 | | | | 8.0 | | | | 8.0 | | | | 8.0 | | | | 8.0 | | | | 8.0 | |
| | Cyan pigment-containing water-insoluble polymer particles A4 | | | | | 8.0 | | | | 8.0 | | | | 8.0 | | | | 8.0 | | | | 8.0 |
| Water dispersion of particles B | Pigment-free water-insoluble polymer particles B1 | Tg: 50°C | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | Pigment-free water-insoluble polymer particles B2 | Tg: -3°C | | | | | | | | | | | | | | | | | | | | |
| | Pigment-free water-insoluble polymer particles B3 | Tg: 107°C | | | | | | | | | | | | | | | | | | | | |
| Alkanediol | 1,2-Propanediol | bp: 188°C | | | | | 15.0 | 15.0 | 15.0 | 15.0 | | | | | | | | | | | | |
| | 1,2-Butanediol | bp: 192°C | | | | | | | | | 15.0 | 15.0 | 15.0 | 15.0 | | | | | | | | |
| | 1,3-Propanediol | bp: 210°C | 15.0 | 15.0 | 15.0 | 15.0 | | | | | | | | | 15.0 | 15.0 | 15.0 | 15.0 | 15.0 | 15.0 | 15.0 | 15.0 |
| Glycol ether | Propylene glycol monomethyl ether | bp: 121°C | | | | | | | | | | | | | | | | | | | | |
| | Propylene glycol monopropyl ether | bp: 149°C | 15.0 | 15.0 | 15.0 | 15.0 | | | | | | | | | | | | | | | | |
| | Dipropylene glycol monomethyl ether | bp: 188°C | | | | | 15.0 | 15.0 | 15.0 | 15.0 | 15.0 | 15.0 | 15.0 | 15.0 | 15.0 | 15.0 | 15.0 | 15.0 | | | | |
| | Diethylene glycol isopropyl ether | bp: 207°C | | | | | | | | | | | | | | | | | 15.0 | 15.0 | 15.0 | 15.0 |
| Surfactant | Acetylene glycol-based surfactant | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Silicone-based surfactant | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Evaluation results | Fixing properties (PET) | | 4 | | | | 5 | | | | 5 | | | | 5 | | | | 4 | | | |
| | Anti-color bleeding properties (PET) | | 5 | | | | 4 | | | | 3 | | | | 5 | | | | 3 | | | |
| | Fixing properties (OPP) | | 4 | | | | 4 | | | | 4 | | | | 5 | | | | 3 | | | |
| | Anti-color bleeding properties (OPP) | | 4 | | | | 3 | | | | 3 | | | | 4 | | | | 3 | | | |

23

EP 3 904 474 A1

TABLE 3-1

| | | | Comparative Examples | | | | | | | | | | | | | | | | |
|---|---|---|---|---|---|---|---|---|---|---|---|---|---|---|---|---|---|---|---|
| | | | 1 | | | | 2 | | | | 3 | | | | 4 | | | |
| | | | 1-1 | 1-2 | 1-3 | 1-4 | 2-1 | 2-2 | 2-3 | 2-4 | 3-1 | 3-2 | 3-3 | 3-4 | 4-1 | 4-2 | 4-3 | 4-4 |
| Water dispersion of particles A | Black pigment-containing water-insoluble polymer particles A1 | | 8.0 | | | | 8.0 | | | | 8.0 | | | | 8.0 | | | |
| | Yellow pigment-containing water-insoluble polymer particles A2 | | | 8.0 | | | | 8.0 | | | | 8.0 | | | | 8.0 | | |
| | Red pigment-containing water-insoluble polymer particles A3 | | | | 8.0 | | | | 8.0 | | | | 8.0 | | | | 8.0 | |
| | Cyan pigment-containing water-insoluble polymer particles A4 | | | | | 8.0 | | | | 8.0 | | | | 8.0 | | | | 8.0 |
| Water dispersion of particles B | Pigment-free water-insoluble polymer particles B1 | Tg: 50°C | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | Pigment-free water-insoluble polymer particles B2 | Tg: -3°C | | | | | | | | | | | | | | | | |
| | Pigment-free water-insoluble polymer particles B3 | Tg: 107°C | | | | | | | | | | | | | | | | |

(continued)

| | | | Comparative Examples | | | | | | | | | | | | | | | | |
|---|---|---|---|---|---|---|---|---|---|---|---|---|---|---|---|---|---|---|---|
| | | | 1 | | | | 2 | | | | 3 | | | | 4 | | | |
| | | | 1-1 | 1-2 | 1-3 | 1-4 | 2-1 | 2-2 | 2-3 | 2-4 | 3-1 | 3-2 | 3-3 | 3-4 | 4-1 | 4-2 | 4-3 | 4-4 |
| Alkanediol | 1,2-Propanediol | bp: 188°C | 15.0 | 15.0 | 15.0 | 15.0 | | | | | 15.0 | 15.0 | 15.0 | 15.0 | 15.0 | 15.0 | 15.0 | 15.0 |
| | 1,2-Butanediol | bp: 192°C | | | | | 15.0 | 15.0 | 15.0 | 15.0 | | | | | | | | |
| Glycol ether | Propylene glycol monomethyl ether | bp: 121°C | | | | | | | | | | | | | | | | |
| | Diethylene glycol isopropyl ether | bp: 207°C | 15.0 | 15.0 | 15.0 | 15.0 | 15.0 | 15.0 | 15.0 | 15.0 | | | | | | | | |
| | Diethylene glycol monobutyl ether | bp: 231°C | | | | | | | | | 15.0 | 15.0 | 15.0 | 15.0 | | | | |
| | Diethylene glycol isobutyl ether | bp: 220°C | | | | | | | | | | | | | 15.0 | 15.0 | 15.0 | 15.0 |
| | Triethylene glycol monobutyl ether | bp: 274°C | | | | | | | | | | | | | | | | |
| Surfactant | Acetylene glycol-based surfactant | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Silicone-based surfactant | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |

(continued)

| | | Comparative Examples | | | | | | | | | | | | | | |
|---|---|---|---|---|---|---|---|---|---|---|---|---|---|---|---|---|
| | | 1 | | | | 2 | | | | 3 | | | | 4 | | | |
| | | 1-1 | 1-2 | 1-3 | 1-4 | 2-1 | 2-2 | 2-3 | 2-4 | 3-1 | 3-2 | 3-3 | 3-4 | 4-1 | 4-2 | 4-3 | 4-4 |
| Evaluation results | Fixing properties (PET) | 3 | | | | 3 | | | | 4 | | | | 1 | | | |
| | Anti-color bleeding properties (PET) | 3 | | | | 2 | | | | 2 | | | | 2 | | | |
| | Fixing properties (OPP) | 3 | | | | 3 | | | | 3 | | | | 1 | | | |
| | Anti-color bleeding properties (OPP) | 2 | | | | 2 | | | | 1 | | | | 1 | | | |

TABLE 3-2

| | | | Comparative Examples | | | | | | | | | | | |
|---|---|---|---|---|---|---|---|---|---|---|---|---|---|---|
| | | | 5 | | | | 6 | | | | 7 | | | |
| | | | 5-1 | 5-2 | 5-3 | 5-4 | 6-1 | 6-2 | 6-3 | 6-4 | 7-1 | 7-2 | 7-3 | 7-4 |
| Water dispersion of particles A | Black pigment-containing water-insoluble polymer particles A1 | | 8.0 | | | | 8.0 | | | | 8.0 | | | |
| | Yellow pigment-containing water-insoluble polymer particles A2 | | | 8.0 | | | | 8.0 | | | | 8.0 | | |
| | Red pigment-containing water-insoluble polymer particles A3 | | | | 8.0 | | | | 8.0 | | | | 8.0 | |
| | Cyan pigment-containing water-insoluble polymer particles A4 | | | | | 8.0 | | | | 8.0 | | | | 8.0 |
| Water dispersion of particles B | Pigment-free water-insoluble polymer particles B1 | Tg: 50°C | 5.0 | 5.0 | 5.0 | 5.0 | | | | | | | | |
| | Pigment-free water-insoluble polymer particles B2 | Tg: -3°C | | | | | 5.0 | 5.0 | 5.0 | 5.0 | | | | |
| | Pigment-free water-insoluble polymer particles B3 | Tg: 107°C | | | | | | | | | 5.0 | 5.0 | 5.0 | 5.0 |
| Alkanediol | 1,2-Propanediol | bp: 188°C | 15.0 | 15.0 | 15.0 | 15.0 | 15.0 | 15.0 | 15.0 | 15.0 | 15.0 | 15.0 | 15.0 | 15.0 |
| | 1,2-Butanediol | bp: 192°C | | | | | | | | | | | | |

(continued)

| | | | Comparative Examples | | | | | | | | | | | |
|---|---|---|---|---|---|---|---|---|---|---|---|---|---|---|
| | | | 5 | | | | 6 | | | | 7 | | | |
| | | | 5-1 | 5-2 | 5-3 | 5-4 | 6-1 | 6-2 | 6-3 | 6-4 | 7-1 | 7-2 | 7-3 | 7-4 |
| Glycol ether | Propylene glycol monomethyl ether | bp: 121°C | | | | | 15.0 | 15.0 | 15.0 | 15.0 | 15.0 | 15.0 | 15.0 | 15.0 |
| | Diethylene glycol isopropyl ether | bp: 207°C | | | | | | | | | | | | |
| | Diethylene glycol monobutyl ether | bp: 231°C | | | | | | | | | | | | |
| | Diethylene glycol isobutyl ether | bp: 220°C | | | | | | | | | | | | |
| | Triethylene glycol monobutyl ether | bp: 274°C | 15.0 | 15.0 | 15.0 | 15.0 | | | | | | | | |
| Surfactant | Acetylene glycol-based surfactant | | 1.0 | 1.0 | 1.0 | 1.0 | 1.0 | 1.0 | 1.0 | 1.0 | 1.0 | 1.0 | 1.0 | 1.0 |
| | Silicone-based surfactant | | 0.2 | 0.2 | 0.2 | 0.2 | 0.2 | 0.2 | 0.2 | 0.2 | 0.2 | 0.2 | 0.2 | 0.2 |
| Evaluation results | Fixing properties (PET) | | 4 | | | | 1 | | | | 1 | | | |
| | Anti-color bleeding properties (PET) | | 1 | | | | 4 | | | | 4 | | | |
| | Fixing properties (OPP) | | 3 | | | | 1 | | | | 1 | | | |
| | Anti-color bleeding properties (OPP) | | 1 | | | | 3 | | | | 3 | | | |

From the results shown in Tables 2 and 3, it was confirmed that the inks and ink sets obtained in the Examples were excellent in fixing properties and anti-color bleeding properties, as compared to the inks and ink sets obtained in the Comparative Examples.

Industrial Applicability

The water-based ink for ink-jet printing according to the present invention is excellent in fixing properties and anti-color bleeding properties even when printed on a low-liquid absorbing printing medium, and therefore can be suitably used for printing for soft packaging, in particular, such as food packaging, etc.

**Claims**

1. A water-based ink for ink-jet printing on a low-liquid absorbing printing medium, comprising pigment-containing water-insoluble polymer particles A, pigment-free water-insoluble polymer particles B, a water-soluble organic solvent and water, in which:

   the water-soluble organic solvent comprises an alkanediol having not less than 3 and not more than 4 carbon atoms and a glycol ether having a boiling point equal to or lower than a boiling point of the alkanediol; and
   a glass transition temperature (Tg) of a water-insoluble polymer constituting the polymer particles B is not lower than 0°C and not higher than 75°C.

2. The water-based ink for ink-jet printing according to claim 1, wherein the alkanediol is at least one compound selected from the group consisting of 1,2-propanediol, 1,3-propanediol and 1,2-butanediol.

3. The water-based ink for ink-jet printing according to claim 1 or 2, wherein the glycol ether is at least one compound selected from the group consisting of propylene glycol monomethyl ether, propylene glycol monopropyl ether, dipropylene glycol monomethyl ether and diethylene glycol monoisopropyl ether.

4. The water-based ink for ink-jet printing according to any one of claims 1 to 3, wherein the pigment-containing water-insoluble polymer particles A are in the form of polymer particles crosslinked with a crosslinking agent.

5. The water-based ink for ink-jet printing according to any one of claims 1 to 4, further comprising at least one surfactant selected from the group consisting of an acetylene glycol-based surfactant and a silicone-based surfactant.

6. The water-based ink for ink-jet printing according to any one of claims 1 to 5, wherein the low-liquid absorbing printing medium is formed of polyethylene terephthalate or polypropylene.

7. The water-based ink for ink-jet printing according to any one of claims 1 to 6, for printing for soft packaging.

8. An ink-jet printing method comprising the step of printing characters or images on a low-liquid absorbing printing medium using the water-based ink according to any one of claims 1 to 7.

9. The ink-jet printing method according to claim 8, wherein a printed surface of the low-liquid absorbing printing medium is heated at a temperature of not higher than 70°C.

10. The ink-jet printing method according to claim 8 or 9, wherein a speed of the printing is not less than 10 m/min.

11. A use of the water-based ink for ink-jet printing according to any one of claims 1 to 6 for printing for soft packaging.

FIG. 1

| | INTERNATIONAL SEARCH REPORT | International application No. |
|---|---|---|
| | | PCT/JP2019/047921 |

**A.  CLASSIFICATION OF SUBJECT MATTER**
C09D 11/322(2014.01)i; B41M 5/00(2006.01)i
FI: C09D11/322; B41M5/00 120; B41M5/00 112; B41M5/00 100

According to International Patent Classification (IPC) or to both national classification and IPC

**B.  FIELDS SEARCHED**

Minimum documentation searched (classification system followed by classification symbols)
C09D11/322; B41M5/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
CAplus/REGISTRY (STN)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2017-71662 A (TOYO INK SC HOLDINGS CO., LTD.) 13.04.2017 (2017-04-13) claims, paragraph [0154], examples 1, 8, 14, 22, 29, 36, 38, 40, 47, 49, 51, 58, 65, 72, 79, 81, 83, 85, 87. 89 | 1-3,5-11<br>1-11 |
| X<br>Y | JP 6425051 B1 (TOYO INK SC HOLDINGS CO., LTD.) 21.11.2018 (2018-11-21) claims, paragraph [0193], examples 72-75 | 1-3,5-11<br>1-11 |
| X<br>Y | JP 2017-186534 A (RICOH CO., LTD.) 12.10.2017 (2017-10-12) claims, paragraph [0082], examples 9, 10 | 1-3,5-11<br>1-11 |
| X<br>Y | JP 2016-53129 A (RICOH CO., LTD.) 14.04.2016 (2016-04-14) claims, examples 10-12 | 1-3,5-11<br>1-11 |

☒  Further documents are listed in the continuation of Box C.   ☒  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 20 February 2020 (20.02.2020) | 10 March 2020 (10.03.2020) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2019/047921

C (Continuation). DOCUMENTS CONSIDERED TO BE RELEVANT

| Category* | Citation of document, with indication, where appropriate, of the relevant passages | Relevant to claim No. |
|---|---|---|
| X | JP 2017-210628 A (RICOH CO., LTD.) 30.11.2017 (2017-11-30) claims, examples A-D | 1-3,5-11 |
| Y | | 1-11 |
| X | JP 2017-222744 A (RICOH CO., LTD.) 21.12.2017 (2017-12-21) claims, paragraph [0100], example 2 | 1-3,5-11 |
| Y | | 1-11 |
| Y | JP 2018-178064 A (TOYO INK SC HOLDINGS CO., LTD.) 15.11.2018 (2018-11-15) claims, paragraph [0092], examples 31, 33, 34, 36 | 1-11 |
| Y | JP 2017-82189 A (KAO CORP.) 18.05.2017 (2017-05-18) claims, paragraphs [0041], [0071], examples 1-14 | 1-11 |
| Y | JP 2016-210969 A (KAO CORP.) 15.12.2016 (2016-12-15) claims, paragraphs [0041], [0072], examples 1-21 | 1-11 |
| Y | JP 2018-108661 A (KAO CORP.) 12.07.2018 (2018-07-12) claims, paragraphs [0007]-[0010], [0068], examples 1-12 | 4-11 |
| P,X | JP 2019-183063 A (TOYO INK SC HOLDINGS CO., LTD.) 24.10.2019 (2019-10-24) claims, example 20 | 1-3,5-11 |

Form PCT/ISA/210 (continuation of second sheet) (January 2015)

**INTERNATIONAL SEARCH REPORT**

Information on patent family members

International application No.

PCT/JP2019/047921

| Patent Documents referred in the Report | Publication Date | Patent Family | Publication Date |
|---|---|---|---|
| JP 2017-71662 A | 13 Apr. 2017 | (Family: none) | |
| JP 6425051 B1 | 21 Nov. 2018 | (Family: none) | |
| JP 2017-186534 A | 12 Oct. 2017 | (Family: none) | |
| JP 2016-53129 A | 14 Apr. 2016 | US 2016/0068697 A1 claims, examples 10-12 | |
| JP 2017-210528 A | 30 Nov. 2017 | (Family: none) | |
| JP 2017-222744 A | 21 Dec. 2017 | (Family: none) | |
| JP 2018-178054 A | 15 Nov. 2018 | (Family: none) | |
| JP 2017-82189 A | 18 May 2017 | (Family: none) | |
| JP 2016-210959 A | 15 Dec. 2016 | US 2018/0142110 A1 claims, paragraphs [0135], [0228]-[0229], examples 1-21 EP 3275949 A1 CN 107532025 A | |
| JP 2018-108651 A | 12 Jul. 2018 | (Family: none) | |
| JP 2019-183063 A | 24 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013216864 A

- JP 2018080255 A